# EUROPÄISCHE PATENTANMELDUNG

(11) **EP 0 956 938 A2**
(43) Veröffentlichungstag der Anmeldung: **17.11.1999**
(21) Anmeldenummer: 99108449.2
(22) Anmeldetag: 30.04.1999
(51) Int. Cl.: B29C 70/24, B29D 31/00

(54) **Verfahren zur Herstellung einer Sandwichplatte**

(30) Priorität: 15.05.1998 DE 19821840
(71) Anmelder: Von Roll Isola GmbH, 86199 Augsburg (DE)
(72) Erfinder: Roland, Frank, 76829 Landau (DE); Hörsch, Friedrich, 89081 Ulm (DE)
(74) Vertreter: Cohausz & Florack

(57) **Zusammenfassung**

Die Erfindung betrifft ein Verfahren zur Herstellung einer Sandwichplatte aus einem dreidimensionalen textilen Abstandsgewebe, in dem das Abstandsgewebe mit Harz getränkt und mit Folien versehen aufgerichtet und gehärtet wird, wobei bei noch nicht gehärtetem Harz unter Anlegen eines Vakuums in einem beidseitig senkrecht zur Maschinenrichtung definierten Raum das Gewebe aufgerichtet und anschließend gehärtet wird.

## Beschreibung

Die Erfindung betrifft ein Verfahren zur Herstellung einer Sandwichplatte aus einem dreidimensionalen textilen Abstandsgewebe.

Sandwichplatten aus dreidimensionalen textilen Abstandsgeweben sind bekannt. So beschreibt die WO 95/35201 ein Verfahren zur Herstellung solcher Platten und schlägt vor, dreidimensionale textile Gewebe aus einer ersten und einer zweiten Gewebeschicht, die miteinander durch Schlaufen verbunden sind, mit einem thermoreaktiven Harz zu tränken und anschließend zu härten. Eine Dehnung des Abstandsgewebes erfolgt wenigstens teilweise durch das Abziehen der Decklagen, bevor das Harz vollständig ausgehärtet ist.

Nachteilig an diesem Verfahren ist, daß nur Abstandsgewebe mit vergleichsweise geringer Materialdicke eingesetzt werden können und ein vollständiges Aufrichten des textilen Materials auf die aufgrund seiner Herstellung größte Materialdicke kaum möglich ist.

Der Erfindung liegt somit die Aufgabe zugrunde; ein Verfahren bereitzustellen, in dem eine Aufrichtung des Abstandsgewebes auf die größtmögliche Ausdehnung sowie die Verarbeitung größerer Materialdicken der Abstandsgewebe möglich ist.

Gelöst wird diese Aufgabe durch ein Verfahren zur Herstellung einer Sandwichplatte aus einem dreidimensionalen textilen Abstandsgewebe, in dem man das mit Harz und Decklagen versehene Abstandsgewebe durch Anlegen eines Vakuums in einem beidseitig senkrecht zur Maschinenrichtung definierten Raum aufrichtet solange das Harz noch nicht angehärtet ist und anschließend härtet. Das erfindungsgemäße Verfahren kann kontinuierlich durchgeführt werden.

Die erfindungsgemäße Verfahrensweise unterscheidet sich von der bekannten Verfahrensführung dadurch, daß keine Anhärtung des Harzes vor dem Verstrecken oder Aufrichten des Abstandsgewebes erfolgt, das Harz also noch flüssig ist. Ferner erfolgt das Aufrichten nicht durch Verziehen der Decklagen sondern durch das Eigenaufstellvermögen des Abstandsgewebes bzw. durch das Anlegen eines Vakuums bei größeren Dicken des Abstandsgewebes zur Unterstützung des Eigenaufstellvermögens. Gemäß einer bevorzugten Ausführungsform, insbesondere bei dicken Abstandsgeweben, kann das Aufrichten der Decklagen des Abstandsgewebes dadurch unterstützt werden, daß ein definiertes Recken gleichzeitig erfolgt.

Da bei dieser Verfahrensweise das Harz noch vollständig flüssig ist, wird das Aufrichten oder Recken des Abstandsgewebes durch bereits verhärtete Harzbereiche nicht behindert und dadurch das Verarbeiten höherer Materialdicken ermöglicht. Das Aufrichten durch Vakuum erlaubt den Einsatz noch dickerer Abstandsgewebe, die dann zu entsprechend dickeren verzugsfreien Sandwichplatten führen. Ferner wird erfindungsgemäß das Härten des Harzes in einem Schritt vorgenommen und ist nicht unterbrochen durch den Arbeitsschritt des Aufrichtens des Gewebes.

Daß nach dem erfindungsgemäßen Verfahren die Folien gegebenenfalls entfernt werden müssen und dann insoweit ein zusätzlicher Arbeitsschritt erforderlich wird, ist eher als vorteilhaft anzusehen, da diese Folien auch als Schutz des Verfahrensprodukts dienen und erst kurz vor der endgültigen Anwendung beim Endabnehmer entfernt werden.

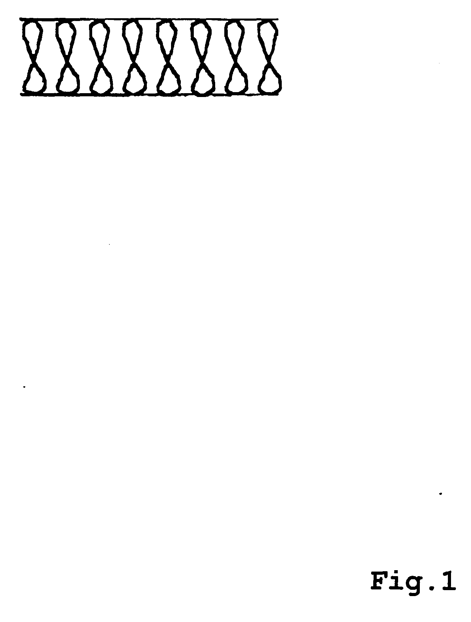

Die als Ausgangsmaterial eingesetzten Abstandsgewebe bestehen aus gewebten Decklagen, die durch eingewobene Stege oder Schlaufen miteinander verbunden sind. Die eingesetzten Garne können beispielsweise 50 bis 700 tex, insbesondere 50 bis 300 tex, betragen. Diese Abstandsgewebe sind im Handel erhältlich. Sie können insbesondere bei geringeren Rückstellkräften der Abstandsgewebe, also bei Abstandsgeweben mit dünneren Garnen, an den jeweils gegenüber liegenden Seiten der Deckgewebe eine Kante aufweisen. Bei den Abstandsgeweben kann es sich um Glasfasergewebe und andere Fasergewebe handeln. Ein erfindungsgemäß einzusetzendes Abstandsgewebe ist in Fig. 1 beispielhaft dargestellt.

Als Harze werden vorzugsweise duroplastische Harze eingesetzt, insbesondere eignen sich Polyesterharze, die sich durch UV-Bestrahlung und/oder thermisch durch Wärme- oder Kältezufuhr härten lassen, thermisch härtbare Phenolharze, Epoxidharze, die durch UV-Bestahlung und/oder Wärmezufuhr härtbar sind und thermisch härtbare Elastomere wie Polyurethanharze.

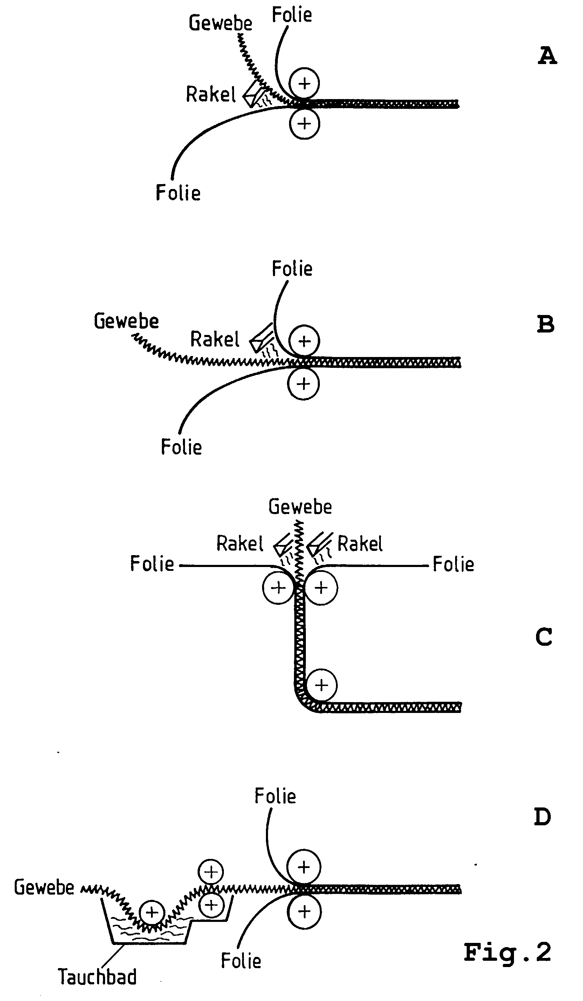

Das Harz kann auf das Abstandsgewebe mit üblichen Harzauftragverfahren aufgebracht werden. Das Harz kann insbesondere durch eine Rakel auf Folie oder Abstandsgewebe aufgetragen werden. Zur Tränkung des Abstandsgewebes mit Harz kann dieses auch durch eine Saugwanne oder durch ein Harztauchbad gezogen werden. Das Abstandsgewebe kann in das Tauchbad durch eine Tauchwalze eingetaucht werden. Überschüssiges Harz kann nach dem Tauchen durch ein Walzenpaar aus dem Gewebe herausgepreßt werden. Die Harzaufnahme des Abstandsgewebes kann beispielsweise 30 bis 70%, bezogen auf das Gewicht des Abstandsgewebes, betragen. Mögliche Verfahrensweisen sind in Fig. 2 erläutert.

Sowohl auf die Ober- als auch auf die Unterseite des imprägnierten Abstandsgewebes werden Deckfolien aufgebracht. Gemäß einer alternativen Ausführungsform der Erfindung kann das Tränkharz auf eine solche Folie aufgetragen werden, die dann zur Tränkung des Abstandsgewebes mit Harz auf das Gewebe aufgebracht wird.

Das mit Folie versehene imprägnierte Abstandsgewebe wird anschließend in einer Vakuumeinrichtung durch Anlegen eines Vakuums auf die größtmögliche Dicke aufgerichtet oder gereckt. Die Höhe der Kammer oder des Raums, in dem die Aufrichtung erfolgt, ist regelbar. Die Höhenregelung kann derart erfolgen, daß einerseits eine Aufrichtung des Abstandsgewebes auf die von seiner Konstruktion her bedingte höchste Dicke möglich ist und andererseits die Decklage gleichmäßig über die gesamte Dicke der Materialbahn, an der die obere und untere Kammerabgrenzung bildenden Vorrichtung anliegt.

Insbesondere bei Abstandsgeweben mit geringen Rückstellkräften, die darüber hinaus an den gegenüberliegenden Seiten der oberen und unteren Gewebebahn (Decklagen) eine Verstärkungskante aufweisen, kann das Aufrichten des Abstandsgewebes durch Recken horizontal zur Maschinenrichtung unterstützt werden.

Nach dem Aufrichten des Materials erfolgt die Härtung. Die geeigneten Härtungsmethoden werden in Abhängigkeit von den verwendeten Harzen gewählt. Nach Härtung des Materials können die Folien entfernt werden. Nach Entfernung der Folien kann eine Kaschierung auflaminiert werden. Andererseits kann die auf der Sandwichplatte befindliche Deckfolie als deren fester Bestandteil darauf verbleiben. Die Folie kann dann eine Kaschierung ersetzen oder aber als Unterlage für eine zusätzliche Kaschierung dienen.

Die erfindungsgemäß eingesetzten Deckfolien sind unkritisch und können einfache Polymerfolien oder Verbundfolien sein. Als Deckfolie oder Decklage oder zusätzlich zur Deckfolie können erfindungsgemäß auch sogenannte Prepregs eingesetzt werden.

Die erfindungsgemäße Sandwichplatte eignet sich beispielsweise als Fassadenverkleidung oder als thermische Energie speichernde Schicht. Sie hat aufgrund der mit Luft gefüllten Zwischenschicht ein hohes Isolationsvermögen und kann überall dort eingesetzt werden, wo eine Wärmeisolierung gewünscht ist.

In Fig. 2 sind mögliche Verfahrensweisen zur Imprägnierung der dreidimensionalen Abstandsgewebe dargestellt.

## Patentansprüche

1. Verfahren zur Herstellung einer Sandwichplatte aus einem dreidimensionalen textilen Abstandsgewebe, in dem das Abstandsgewebe mit Harz getränkt und mit Folien versehen aufgerichtet und gehärtet wird, dadurch gekennzeichnet, daß man bei noch nicht gehärtetem Harz unter Anlegen eines Vakuums in einem beidseitig senkrecht zur Maschinenrichtung definierten Raum das Gewebe aufrichtet und anschließend härtet.

2. Verfahren nach Anspruch 1, dadurch gekennzeichnet, daß das Harz ein duroplastisches Harz ist.

3. Verfahren nach Anspruch 1 oder 2, dadurch gekennzeichnet, daß die Längsränder der Decklagen des textilen Abstandsgewebes mit Verstärkungskanten ausgebildet sind und das Gewebe durch Recken mittels einer an den Verstärkungskanten angreifenden Vorrichtung zusätzlich aufgerichtet wird.

4. Verfahren nach Anspruch 1 bis 3, dadurch gekennzeichnet, daß man die Folien nach der Härtung entfernt.

5. Verfahren nach Anspruch 4, dadurch gekennzeichnet, daß man auf mindestens einer Seite der gehärteten Sandwichplatte eine Kaschierung aufbringt.

6. Verfahren nach einem der Ansprüche 1 bis 5, dadurch gekennzeichnet, daß das Abstandsgewebe zur Tränkung durch eine, flüssiges Harz enthaltende Tauchwanne geführt wird.
